# FASCICULE DE BREVET EUROPEEN

(11) **EP 3 803 810 B1**
(45) Date de publication et mention de la délivrance du brevet: **26.07.2023**
(21) Numéro de dépôt: 19742831.1
(22) Date de dépôt: 24.05.2019
(51) Int. Cl.: G07C 9/00, B60R 25/20

(54) **PROCÉDÉ DE VÉRIFICATION DE PROPRIÉTE D'UN VÉHICULE PAR SYNCHRONISATION DE COMPTEURS DE TEMPS**
VERFAHREN ZUR ÜBERPRÜFUNG DER EIGENTÜMERSCHAFT EINES FAHRZEUGS DURCH SYNCHRONISATION VON ZEITZÄHLERN
METHOD OF VERIFYING OWNERSHIP OF A VEHICLE BY SYNCHRONIZATION OF TIME COUNTERS

(30) Priorité: 31.05.2018 FR 1854666
(43) Date de publication de la demande: 14.04.2021
(73) Titulaire: PSA Automobiles SA, 78300 Poissy (FR)
(72) Inventeur: REBOUL, Noe, 91470 LIMOURS (FR); PATUREAU MIRAND, Sylvain, 91940 GOMETZ LE CHATEL (FR)
(86) Numéro de dépôt international: PCT/FR2019/051214
(87) Numéro de publication internationale: WO 2019/229340

(56) Documents cités:
- DE-A1- 10 009 057
- FR-A1- 2 965 434
- US-B1- 9 894 492

## Description

La présente invention concerne de manière générale un procédé de vérification de la propriété d'un véhicule.

Il est connu dans l'art antérieur de procéder à la vérification de la propriété par l'intermédiaire de document papier tel que le certificat d'immatriculation du véhicule, des papiers d'identité du propriétaire et de la possession d'au moins une clé physique de démarrage du véhicule.

Le document US20170012989 décrit un procédé d'enregistrement d'un propriétaire d'un véhicule automobile sur un serveur. Selon ce document, le véhicule comprend un système ayant au moins une interface utilisateur. Le procédé comprend une connexion sans fil entre le véhicule et le premier serveur puis envoie des données d'utilisateur au premier serveur en réponse à un actionnement de l'utilisateur sur l'interface utilisateur. A l'issue du processus, une confirmation d'inscription du premier serveur est envoyée à l'interface utilisateur du véhicule. Ce procédé nécessite que le véhicule puisse se connecter directement au serveur. Par ailleurs, l'identité de l'utilisateur n'est pas vérifiée lors des opérations d'enregistrement. On connait par le document DE10009057 un système comprenant au moins une clé portée régulièrement par un utilisateur, un système de verrouillage pour accéder à un objet de sécurité à l'aide de la clé et un centre de surveillance qui communique avec le système de verrouillage. On connait par le document FR2965434 un procédé d'appairage d'un téléphone mobile avec un véhicule automobile, ledit téléphone mobile apparié pouvant être utilisé pour le verrouillage/déverrouillage et/ou le démarrage dudit véhicule automobile à l'aide d'au moins une partie d'un code d'authentification.

Un but de la présente invention est de répondre aux inconvénients de l'art antérieur mentionnés ci-dessus et en particulier, de procéder à l'enregistrement de la propriété d'un véhicule par un utilisateur sur un serveur en garantissant la légitimité de l'utilisateur.

Pour cela un premier aspect de l'invention concerne un procédé de vérification de la propriété d'un véhicule défini par la revendication indépendante 1.

Le procédé selon l'invention permet de garantir que l'utilisateur est bien le propriétaire du véhicule et qu'il est bien présent physiquement dans le véhicule lors de la mise en oeuvre du procédé. Le procédé selon l'invention permet également d'associer de manière sûre un propriétaire identifié avec son véhicule.

Avantageusement, l'étape d'authentification comprend la transmission d'un identifiant unique par le serveur d'authentification vers le dispositif portable de communication, cet identifiant unique est intégré dans tous les messages transmis par le dispositif portable de communication vers le serveur d'authentification afin de garantir l'authenticité des informations provenant du dispositif portable de communication.

Avantageusement, l'étape de détection d'un état de présence dans le véhicule de la clé physique de démarrage et du propriétaire du véhicule comprend le démarrage du véhicule avec la clé physique et l'appairage du dispositif portable de communication avec un module de communication sans fil du véhicule.

Avantageusement, la transmission de l'état de présence dans le véhicule de la clé physique de démarrage et du propriétaire du véhicule au serveur d'authentification comprend un code d'identification unique du véhicule.

Avantageusement, le signal de validation de l'usage des moyens de verrouillage/fermeture par le dispositif portable de communication du propriétaire comprend un code d'identification des moyens de verrouillage/fermeture.

Avantageusement, le procédé selon l'invention comprend une étape de détection d'un état de présence simultanée dans le véhicule de la clé physique de démarrage et du propriétaire du véhicule

Un deuxième aspect de l'invention concerne un serveur d'authentification de vérification de la propriété d'un véhicule, caractérisé en ce qu'il comprend des moyens de mise en oeuvre des étapes du procédé selon le premier aspect de l'invention.

Un troisième aspect de l'invention concerne un programme d'ordinateur comportant des instructions pour mettre en oeuvre le procédé de vérification de la propriété d'un véhicule selon le premier aspect de l'invention, lorsqu'il est exécuté sur un ou plusieurs processeurs.

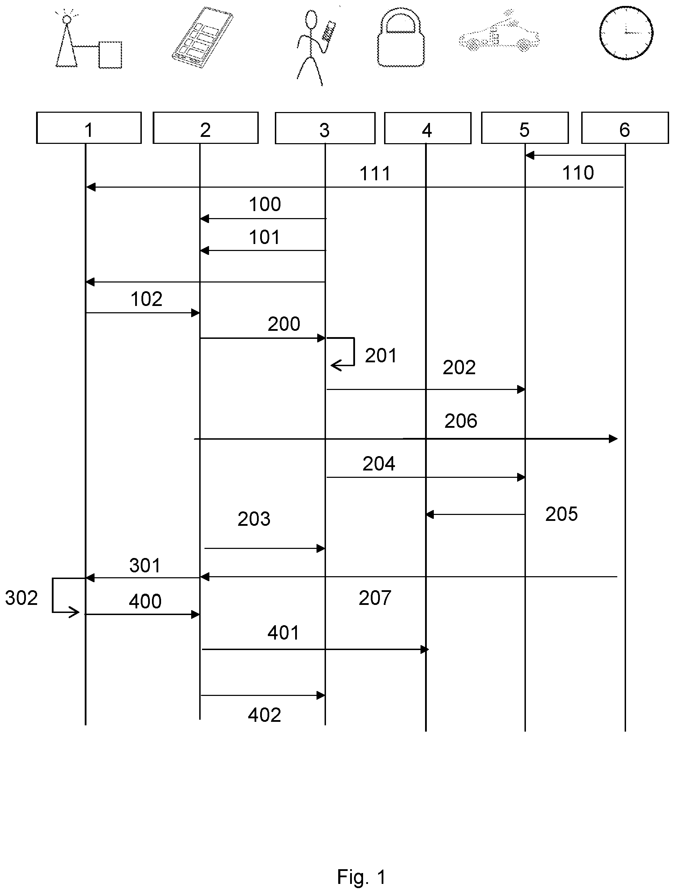

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure unique représente le diagramme de séquences du procédé selon l'invention.

Le procédé selon l'invention permet à un utilisateur 3 de valider la propriété électronique d'un véhicule 5 dont il est propriétaire et dont il possède au moins une clé physique de déverrouillage/démarrage. Le procédé selon l'invention met en oeuvre des échanges entre un module de communication sans fil ou calculateur 5 situé dans le véhicule et au moins un serveur distant d'authentification 1 par l'intermédiaire d'un dispositif portable de communication 2, tel qu'un téléphone portable, de l'utilisateur.

Selon l'invention, le procédé de vérification de la propriété d'un véhicule comprend une étape de synchronisation 110 d'un compteur de temps ou horloge 6 du calculateur 5 du véhicule avec un compteur de temps ou horloge 6 du serveur d'authentification. En d'autre terme, le véhicule et le serveur d'authentification 1 dispose d'un compteur de temps donnant la même valeur de temps à chaque instant.

Le procédé de vérification de la propriété d'un véhicule 5 comprend une étape d'authentification 100, 101, 102 du propriétaire sur le serveur distant d'authentification 1. Cette étape est réalisée par l'intermédiaire du dispositif portable de communication 2 de l'utilisateur. Cette étape a pour objectif de garantir que l'utilisateur est bien le propriétaire du véhicule.

Selon le mode de réalisation représentée, l'utilisateur 3 exécute un programme sur son dispositif portable de communication 2. Ce programme 100 permet d'établir une connexion entre le dispositif portable de communication 2 et le serveur d'authentification 1. L'utilisateur transmet alors une requête d'enregistrement 101 du véhicule au serveur d'authentification via son dispositif portable de communication, pour créer au moins un lien de propriété entre l'utilisateur et le véhicule. Cette requête d'enregistrement 101 comprend des informations sur l'identifié de l'utilisateur, et l'identification du véhicule. A titre d'exemple, une copie d'une pièce d'identifié et/ou une photo de l'utilisateur peuvent être transmises au serveur d'authentification 1. Les informations de la requête d'enregistrement 101 sont vérifiées sur le serveur distant pour valider la suite du procédé selon l'invention.

Selon une variante de réalisation et afin de garantir la sécurité des échanges entre le dispositif portable de communication de l'utilisateur et le serveur distant, le serveur d'authentification 1 peut transmettre un identifiant unique 102 ou token en anglais au dispositif portable de communication 2. Cet identifiant unique pourra être intégré dans chaque échange entre le serveur d'authentification 1 et le dispositif portable de communication 2 de l'utilisateur. Cet identifiant unique 102 peut avoir une durée de validité limité pour renforcer la sécurité des échanges.

Une fois l'étape d'authentification validée, le procédé selon l'invention se poursuit par une étape de détection 200 de la présence dans le véhicule de l'utilisateur et de la clé physique du véhicule. Cette étape comprend, par exemple, le démarrage 201 du véhicule avec la clé physique du véhicule, l'activation 202 d'un module de communication sans fil du véhicule, et l'appairage 206 de ce module de communication sans fil avec le dispositif portable de communication 2 de l'utilisateur. Lorsque le dispositif portable de communication est appairé, la présence de l'utilisateur et de la clé physique du véhicule simultanément dans le véhicule est établie.

Le procédé comprend également une étape d'activation 204 de moyen de verrouillage/fermeture 4 situé dans le véhicule. Ces moyens de verrouillage/fermeture 4 comprennent un module de communication sans fil et permettent l'ouverture et le démarrage du véhicule sans la clé physique. Toutefois, l'utilisation des moyens de verrouillage/fermeture ne peuvent être utilisé que via un dispositif disposant de code d'usage. La demande d'activation 203 est par exemple affichée sur le dispositif portable de communication de l'utilisateur. L'activation des moyens de verrouillage/fermeture 4 est réalisée par l'utilisateur par l'intermédiaire d'une interface d'utilisation du véhicule.

L'état de présence généré 207 par le dispositif portable de communication est transmis 301 par ce dernier au serveur d'authentification 1 pour valider le au moins lien de propriété créé lors l'étape d'authentification. L'état de présence comprend l'état du moteur du véhicule (marche ou arrêt) et une donnée permettant d'identifier le véhicule de manière certaine. A titre d'exemple, cette donnée est un numéro d'identification unique mémorisé sur un boitier commande du véhicule. Ce numéro est récupéré sur le dispositif portable de communication via le module de communication sans fil du véhicule.

Selon l'invention, l'état de présence comprend également la valeur du compteur de temps synchronisé du véhicule.

Les informations de l'état de présence reçues par le serveur d'authentification sont vérifiées 302 pour confirmer que l'utilisateur correspond bien au propriétaire du véhicule, que le véhicule correspond bien à celui de l'utilisateur et que ce dernier est bien présent dans le véhicule ainsi que la clé physique du véhicule au moment de la mise en oeuvre du procédé de vérification de propriété. Par ailleurs, la valeur du compteur de temps synchronisé du véhicule est comparée à valeur du compteur de temps synchronisé du serveur d'authentification pour confirmer que cette valeur correspond bien à la valeur attendue.

Si l'état de présence est validé, le serveur d'authentification génère un signal d'activation d'usage du module de verrouillage/fermeture 4 du véhicule.

Ce signal d'autorisation d'usage du module de fermeture/verrouillage est transmis 400 par le serveur d'authentification 1 au dispositif portable de communication 2. Le signal d'autorisation d'usage du module de fermeture/verrouillage comprend notamment, le code de confirmation permettant non seulement l'activation mais également l'utilisation du module de fermeture/verrouillage 4. La réception du signal d'autorisation d'usage du module de fermeture/verrouillage par le dispositif portable de communication 2 déclenche la connexion 401 du dispositif portable de communication 2 au module de fermeture/verrouillage 4 et par exemple l'affichage d'un message 402 sur le dispositif portable de communication 2 informant l'utilisateur que l'opération de vérification de propriété est terminée.

On comprend qu'à l'issue du procédé selon l'invention, le dispositif portable de communication 2 de l'utilisateur permet d'ouvrir et de démarrer le véhicule sans disposer de la clé physique du véhicule en se connectant directement au module de fermeture/verrouillage 4.

Selon une variante de réalisation, tous les messages transmis depuis le dispositif portable de communication vers le serveur d'authentification comprennent également un code unique d'identification du véhicule afin de toujours associé le dispositif portable de communication 2 et le véhicule. Par ailleurs, l'ensemble des communications entre le véhicule, le dispositif portable de communication et le serveur d'authentification peut être chiffré de sorte que les informations ne puissent être reconnues et utilisées uniquement par un serveur d'authentification et un véhicule compatible.

On comprendra que diverses modifications et/ou améliorations évidentes pour l'homme du métier peuvent être apportées aux différents modes de réalisation de l'invention décrits dans la présente description sans sortir du cadre de l'invention définie par les revendications.

## Revendications

1. Procédé de vérification de la propriété d'un véhicule (5) par un serveur d'authentification comportant un compteur de temps, le véhicule comprenant un compteur de temps, des moyens (4) de verrouillage/fermeture comprenant un module de communication sans fil pouvant communiquer avec un dispositif portable de communication (2), tel qu'un téléphone portable, le véhicule (5) est associé à une clé physique de démarrage, le dispositif portable de communication (2) pouvant communiquer avec le serveur d'authentification, **caractérisé en ce que** le procédé comprend les étapes suivantes :
- Synchronisation (110, 111) du compteur de temps du véhicule avec le compteur de temps du serveur d'authentification,
- Authentification (100, 101, 102) du propriétaire du véhicule sur le serveur d'authentification par l'intermédiaire du dispositif portable de communication du propriétaire, tel qu'un portable, pour créer sur le serveur au moins un lien de propriété entre le propriétaire et le véhicule, et la transmission d'une requête d'enregistrement (101) du véhicule au serveur d'authentification via son dispositif portable de communication, la requête d'enregistrement (101) comprenant des informations sur l'identité du propriétaire, et l'identification du véhicule,
- Réception (301) par le serveur d'authentification, suite à une demande d'activation (204, 205) des moyens de verrouillage/fermeture par le propriétaire du véhicule, d'un état de présence simultanée dans le véhicule de la clé physique de démarrage et du propriétaire du véhicule au serveur d'authentification par l'intermédiaire du dispositif portable de communication du propriétaire, pour valider le au moins lien créé, l'état de présence comprenant la date du compteur de temps du véhicule,
- émission (400) depuis le serveur d'authentification d'un signal de validation de l'usage des moyens de verrouillage/fermeture (4) au dispositif portable de communication du propriétaire, si l'état de présence du propriétaire et de la clé physique du véhicule sont confirmées et si la date du compteur de temps du véhicule transmise correspond avec le compteur de temps du serveur d'authentification,
et **en ce qu'**il permet ultérieurement le démarrage du véhicule via le dispositif portable de communication (3) du propriétaire sans la clé physique de démarrage.

2. Procédé selon la revendication 1, **caractérisé en ce que** l'étape d'authentification (100) comprend la transmission (102) d'un identifiant unique par le serveur d'authentification vers le dispositif portable de communication, cet identifiant unique est enregistré sur le dispositif portable de communication et intégré dans tous les messages transmis par le dispositif portable de communication vers le serveur d'authentification afin de garantir l'authenticité des informations provenant du dispositif portable de communication.

3. Procédé selon l'une des revendications 1 ou 2, **caractérisé en ce que** l'étape de détection d'un état de présence dans le véhicule de la clé physique de démarrage et du propriétaire du véhicule comprend le démarrage (201) du véhicule avec la clé physique et l'appairage (206) du dispositif portable de communication avec un module de communication sans fil du véhicule (5).

4. Procédé selon l'une des revendications précédentes, **caractérisé en ce que** la transmission de l'état de présence dans le véhicule de la clé physique de démarrage et du propriétaire du véhicule au serveur d'authentification comprend un code d'identification unique du véhicule.

5. Procédé selon l'une des revendications précédentes, **caractérisé en ce que** le signal de validation de l'usage des moyens de verrouillage/fermeture par le dispositif portable de communication du propriétaire comprend un code d'identification des moyens de verrouillage/fermeture.

6. Procédé selon l'une des revendications précédentes, **caractérisé en ce qu'**il comprend une étape de détection d'un état de présence (200, 201, 202, 206) simultanée dans le véhicule de la clé physique de démarrage et du propriétaire du véhicule.

7. Serveur d'authentification, **caractérisé en ce qu'**il comprend des moyens de mise en oeuvre des étapes du procédé selon l'une quelconque des revendications 1 à 5.

8. Programme d'ordinateur comportant des instructions pour mettre en oeuvre le procédé de vérification de la propriété d'un véhicule selon l'une des revendications 1 à 5, lorsqu'il est exécuté sur un ou plusieurs processeurs.

## Patentansprüche

1. Verfahren zum Verifizieren des Eigentums eines Fahrzeugs (5) durch einen Authentifizierungsserver mit einem Zeitzähler, wobei das Fahrzeug einen Zeitzähler, Mittel (4) zum Verriegeln/Schließen mit einem drahtlosen Kommunikationsmodul, das mit einer tragbaren Kommunikationsvorrichtung (2), wie einem Mobiltelefon, kommunizieren kann, umfasst, das Fahrzeug (5) mit einem physikalischen Startschlüssel verbunden ist, die tragbare Kommunikationsvorrichtung (2) mit dem Authentifizierungsserver kommunizieren kann, **dadurch gekennzeichnet, dass** das Verfahren die folgenden Schritte umfasst:
- Synchronisieren (110, 111) des Zeitgebers des Fahrzeugs mit dem Zeitgeber des Authentifizierungsservers,
- Authentifizierung (100, 101, 102) des Fahrzeugbesitzers am Authentifizierungsserver über das tragbare Kommunikationsgerät des Besitzers, wie etwa ein Handy, um auf dem Server mindestens eine Eigentumsbeziehung zwischen dem Besitzer und dem Fahrzeug herzustellen, und Übertragen einer Registrierungsanforderung (101) des Fahrzeugs an den Authentifizierungsserver über sein tragbares Kommunikationsgerät, wobei die Registrierungsanforderung (101) Informationen über die Identität des Besitzers, und die Identifizierung des Fahrzeugs enthält,
- Empfang (301) eines Zustands der gleichzeitigen Anwesenheit des physikalischen Startschlüssels und des Fahrzeugbesitzers im Fahrzeug beim Authentifizierungsserver über das tragbare Kommunikationsgerät des Besitzers durch den Authentifizierungsserver nach einer Aktivierungsanforderung (204, 205) der Verriegelungs-/Schließmittel durch den Fahrzeugbesitzer, um die mindestens eine erzeugte Verbindung zu validieren, wobei der Anwesenheitszustand das Datum des Zeitzählers des Fahrzeugs umfasst,
- Senden (400) eines Signals vom Authentifizierungsserver zur Bestätigung der Verwendung der Verriegelungs-/Schließmittel (4) an das tragbare Kommunikationsgerät des Eigentümers, wenn der Anwesenheitsstatus des Eigentümers und des physikalischen Fahrzeugschlüssels bestätigt werden und das übertragene Datum des Fahrzeugzeitmessers mit dem Zeitmesser des Authentifizierungsservers übereinstimmt,
und dass dies später das Starten des Fahrzeugs über das tragbare Kommunikationsgerät (3) des Eigentümers ohne den physischen Startschlüssel ermöglicht.

2. Verfahren nach Anspruch 1, **dadurch gekennzeichnet, dass** der Authentifizierungsschritt (100) die Übertragung (102) einer eindeutigen Kennung durch den Authentifizierungsserver an das tragbare Kommunikationsgerät umfasst, wobei diese eindeutige Kennung auf dem tragbaren Kommunikationsgerät gespeichert und in alle Nachrichten integriert wird, die von dem tragbaren Kommunikationsgerät an den Authentifizierungsserver übertragen werden, um die Authentizität der von dem tragbaren Kommunikationsgerät stammenden Informationen zu gewährleisten.

3. Verfahren nach einem der Ansprüche 1 oder 2, **dadurch gekennzeichnet, dass** der Schritt des Erfassens eines Zustands der Anwesenheit des physischen Startschlüssels und des Fahrzeugbesitzers im Fahrzeug das Starten (201) des Fahrzeugs mit dem physischen Schlüssel und das Pairing (206) des tragbaren Kommunikationsgeräts mit einem drahtlosen Kommunikationsmodul des Fahrzeugs (5) umfasst.

4. Verfahren nach einem der vorhergehenden Ansprüche, **dadurch gekennzeichnet, dass** die Übertragung des Status der Anwesenheit des physischen Startschlüssels und des Fahrzeugbesitzers im Fahrzeug an den Authentifizierungsserver einen eindeutigen Identifikationscode des Fahrzeugs umfasst.

5. Verfahren nach einem der vorhergehenden Ansprüche, **dadurch gekennzeichnet, dass** das Signal zur Bestätigung der Verwendung der Verriegelungs-/Schließmittel durch das tragbare Kommunikationsgerät des Eigentümers einen Identifikationscode für die Verriegelungs-/Schließmittel umfasst.

6. Verfahren nach einem der vorhergehenden Ansprüche, **dadurch gekennzeichnet, dass** es einen Schritt des Erfassens eines Zustands der gleichzeitigen Anwesenheit (200, 201, 202, 206) des physikalischen Startschlüssels und des Fahrzeugbesitzers im Fahrzeug umfasst.

7. Authentifizierungsserver, **dadurch gekennzeichnet, dass** er Mittel zur Durchführung der Schritte des Verfahrens nach einem der Ansprüche 1 bis 5 umfasst.

8. Computerprogramm mit Anweisungen zur Durchführung des Verfahrens zur Überprüfung des Eigentums an einem Fahrzeug nach einem der Ansprüche 1 bis 5, wenn es auf einem oder mehreren Prozessoren ausgeführt wird.

## Claims

1. Method for verifying the ownership of a vehicle (5) by an authentication server comprising a time counter, the vehicle comprising a time counter, locking/closing means (4) comprising a wireless communication module that can communicate with a portable communication device (2), such as a portable telephone, the vehicle (5) is associated with a physical ignition key, the portable communication device (2) can communicate with the authentication server, **characterised in that** the method comprises the following steps:
- Synchronisation (110, 111) of the time counter of the vehicle with the time counter of the authentication server,
- Authentication (100, 101, 102) of the owner of the vehicle on the authentication server via the owner's portable communication device, such as a mobile phone, to create on the server at least one ownership link between the owner and the vehicle, and transmission of a registration request (101) from the vehicle to the authentication server via its portable communication device, the registration request (101) comprising information on the identity of the owner, and identification of the vehicle,
- reception (301) by the authentication server, following a request for activation (204, 205) of the locking/closing means by the owner of the vehicle, of a state of simultaneous presence in the vehicle of the physical starting key and of the owner of the vehicle to the authentication server via the owner's portable communication device, in order to validate the at least one link created, the state of presence comprising the date of the vehicle's time counter,
- transmission (400) from the authentication server of a signal validating the use of the locking/closing means (4) to the owner's portable communication device, if the state of presence of the owner and of the physical key of the vehicle are confirmed and if the date of the time counter of the vehicle transmitted corresponds with the time counter of the authentication server,
and subsequently enables the vehicle to be started via the owner's portable communication device (3) without the physical start key.

2. Method according to claim 1, **characterised in that** the authentication step (100) comprises the transmission (102) of a unique identifier by the authentication server to the portable communication device, this unique identifier is recorded on the portable communication device and integrated into all the messages transmitted by the portable communication device to the authentication server in order to guarantee the authenticity of the information originating from the portable communication device.

3. Method according to one of claims 1 or 2, **characterised in that** the step of detecting a state of presence in the vehicle of the physical starting key and of the owner of the vehicle comprises starting (201) the vehicle with the physical key and pairing (206) the portable communication device with a wireless communication module of the vehicle (5).

4. Method according to one of the preceding claims, **characterised in that** the transmission of the state of presence in the vehicle of the physical start-up key and of the owner of the vehicle to the authentication server comprises a unique identification code of the vehicle.

5. Method according to one of the preceding claims, **characterised in that** the signal for validation of the use of the locking/closing means by the owner's portable communication device comprises an identification code for the locking/closing means.

6. Method according to one of the preceding claims, **characterised in that** it comprises a step of detecting a state of simultaneous presence (200, 201, 202, 206) in the vehicle of the physical ignition key and of the owner of the vehicle.

7. Authentication server, **characterised in that** it comprises means for implementing the steps of the method according to any one of claims 1 to 5.

8. Computer program comprising instructions for implementing the method of verifying the ownership of a vehicle according to any one of claims 1 to 5, when it is executed on one or more processors.
